## Europäisches Patentamt
## European Patent Office
## Office européen des brevets

(11) Veröffentlichungsnummer: **0 060 979**
**B1**

(12) **EUROPÄISCHE PATENTSCHRIFT**

(45) Veröffentlichungstag der Patentschrift:
30.05.84

(51) Int. Cl.³: **F 28 C 3/12**

(21) Anmeldenummer: **82100762.2**

(22) Anmeldetag: **03.02.82**

(54) **Wärmetauscher.**

(30) Priorität: **24.03.81 DE 3111527**

(43) Veröffentlichungstag der Anmeldung:
**29.09.82 Patentblatt 82/39**

(45) Bekanntmachung des Hinweises auf die Patenterteilung:
**30.05.84 Patentblatt 84/22**

(84) Benannte Vertragsstaaten:
**BE DE FR GB IT**

(56) Entgegenhaltungen:
**EP - A - 0 016 935
DE - A - 2 716 454
DE - B - 1 225 095
DE - B - 1 250 059
DE - B - 1 280 486
FR - A - 1 540 679
GB - A - 2 094 959**

(73) Patentinhaber: **Krupp Polysius AG,
Graf-Galen-Strasse 17, D-4720 Beckum (DE)**

(72) Erfinder: **Kreft, Wilfried, Ing.grad., Kirschweg 12,
D-4722 Ennigerloh (DE)**
Erfinder: **Rother, Wolfgang, Ing.grad.,
Anton-Aulke-Weg 4, D-4742 Stromberg (DE)**
Erfinder: **Tiggesbäumker, Peter, Dipl.-Ing.,
Prozessionsweg 4, D-4740 Oelde (DE)**
Erfinder: **Menzel, Karl, Dipl.-Ing., Im Vinkendahl 27a,
D-4720 Beckum 2 (DE)**
Erfinder: **Schmelter, Herbert W., Ing. grad., Tümmler
Strasse 26, D-4722 Ennigerloh (DE)**
Erfinder: **Weber, Heinrich, Ing. grad.,
Kaiser-Wilhelm-Strasse 112, D-4720 Beckum 2 (DE)**

(74) Vertreter: **Tetzner, Volkmar, Dr.-Ing. Dr. Jur. et al,
Van-Gogh-Strasse 3, D-8000 München 71 (DE)**

**Beschreibung**

Die Erfindung betrifft einen mehrstufigen Wärmetauscher zur Wärmebehandlung von feinkörnigem Gut mit einem heissen Gasstrom, der den mehrere übereinander angeordnete Wärmetauscherstufen enthaltenden Wärmetauscher von unten nach oben durchströmt, wobei das dem Wärmetauscher oben zugeführte Gut wiederholt aus dem Gasstrom abgeschieden und dann in der nächst tieferen Wärmetauscherstufe erneut in den Gasstrom eingeführt wird, wobei wenigstens eine der unteren Wärmetauscherstufen einen Umlenkabscheider enthält, dessen Gaseintrittsstutzen und Gasaustrittsstutzen am Umfang des Umlenkabscheiders gegeneinander versetzt und in unterschiedlicher Höhenlage oberhalb eines Abscheidetrichters angeordnet sind und wenigstens die oberste Wärmetauscherstufe einen Zyklon mit horizontalem Gaseintrittsstutzen und vertikalem Tauchrohr aufweist.

Bekannte Wärmetauscher zur Vorwärmung von feinkörnigem Gut (etwa von Zementrohmehl) vor einem nachfolgenden Brenn- bzw. Sinterprozess bestehen aus einer Anzahl von über ihre Gas- und Gutleistungen miteinander verbundenen Zyklonen, die vom Gut – im Gegenstrom zum heissen Gas – nacheinander durchsetzt werden. Durch die Hintereinanderschaltung mehrerer Zyklonstufen ergibt sich – über den gesamten Wärmetauscher betrachtet – eine fast ideale Gegenstrombewegung von Gas und Gut und damit ein sehr hoher thermischer Wirkungsgrad der Wärmeübertragung.

Nachteilig ist bei diesen bekannten Ausführungen der verhältnismässig hohe Energiebedarf, der durch die Überwindung des grossen Strömungswiderstandes der mehreren Zyklonstufen bedingt ist. Ungünstig ist ferner das beträchtliche Bauvolumen, insbesondere die grosse Bauhöhe eines solchen mehrstufigen Zyklonwärmetauschers.

Es ist weiterhin ein mehrstufiger Wärmetauscher bekannt (DE-AS 12 80 486), der in drei Wärmetauscherstufen einen Umlenkabscheider und in der letzten Wärmetauscherstufe einen Zyklon enthält. Die Umlenkabscheider besitzen dabei eine im Grundriss rechteckige Entspannungskammer mit trichterförmigem Boden, in die auf der einen Seite von unten her ein Eintrittskanal für den heissen Gasstrom einmündet, aus der auf der gegenüberliegenden Seite nach oben ein Absaugkanal herausführt, wobei in der Decke der Kammer ein Aufgaberohr für das in der nächst höheren Stufe ausgeschiedene Gut einmündet.

Ein derartiger Umlenkabscheider besitzt zwar einen wesentlich geringeren Druckverlust als ein üblicher Zyklon, er ist jedoch andererseits mit dem Nachteil eines sehr schlechten Abscheidegrades behaftet. Sehr nachteilig ist bei dieser bekannten Ausführung weiterhin, dass das über die Decke der Entspannungskammer in den Umlenkabscheider eingeführte Gut mit dem heissen Gasstrom nur eine ganz kurze Zeit in Berührung steht, ehe es in der Entspannungskammer aus dem Gasstrom wieder abgeschieden wird; dadurch ergibt sich ein schlechter Wärmeübertragungsgrad.

Der Erfindung liegt daher die Aufgabe zugrunde, unter Vermeidung dieser Nachteile der bekannten Ausführungen einen mehrstufigen Wärmetauscher der eingangs genannten Art zu schaffen, der sich durch einen guten Abscheidungsgrad und einen niedrigen Druckverlust und damit durch einen guten thermischen Wirkungsgrad, einen vergleichsweise geringen Energiebedarf und ein niedriges Bauvolumen auszeichnet.

Diese Aufgabe wird erfindungsgemäss durch folgende Merkmale gelöst:

a) Die Umlenkabscheider weisen über ihrem Abscheidetrichter einen Oberteil von zylindrischem Querschnitt auf;
b) der Gaseintrittsstutzen ist tangential an diesen zylindrischen Oberteil der Umlenkabscheider angeschlossen;
c) die Gutaustragsleitungen der einzelnen Wärmetauscherstufen münden jeweils in die zum Gaseintrittsstutzen des Umlenkabscheiders der nächst tieferen Wärmetauscherstufe führenden Gasleitung ein.
Wie eingehende Untersuchungen zeigten, läuft bei dem erfindungsgemässen Umlenkabscheider die Abscheidung des Gutes aus dem Gasstrom im wesentlichen in drei Phasen ab:

– Beim tangentialen Eintritt des guthaltigen Gasstromes in den zylindrischen Oberteil des Umlenkabscheiders erfolgt eine Abscheidung des Feststoffes durch erzwungene Fliehkräfte;
– eine weitere Staubabscheidung geschieht durch Schwerkraft bei der anschliessenden Bewegung des guthaltigen Gasstromes im Innern des Umlenkabscheiders;
– in einer dritten Phase der Entstaubung erfolgt eine Staubabscheidung durch Fliehkräfte bei der Umlenkung der Gasströmung, die durch die unterschiedliche Höhenlage von Gaseintrittsstutzen und Gasaustrittsstutzen bedingt ist.

Der bei dem erfindungsgemässen Wärmetauscher verwendete Umlenkabscheider vereinigt damit die wesentlichen Vorzüge des bekannten Gaszyklons (hoher Abscheidungsgrad) mit denen des Umlenkabscheiders (niedriger Druckverlust), vermeidet jedoch deren Nachteile. Tatsächlich ist der Abscheidegrad des erfindungsgemäss verwendeten Umlenkabscheiders nur wenig schlechter als der eines üblichen Zyklons, wobei der thermische Wirkungsgrad nur unerheblich beeinträchtigt wird. Durch den im Vergleich zu einem Zyklon wesentlich niedrigeren Druckverlust des erfindungsgemässen Umlenkabscheiders ergibt sich insgesamt ein deutlich verringerter Energiebedarf. Die Erfindung nutzt dabei die Erkenntnis aus, das in einem Zyklon der grösste Teil der Feststoffe bereits während des ersten Umlaufes bzw. durch eine einzige Strömungsumlenkung abgeschieden wird, während die Abscheidung des kleinen Restteiles der Feststoffe vieler Umläufe bedarf, was den Hauptteil des Druckverlustes darstellt.

Verglichen mit den oben geschilderten bekannten Umlenkabscheidern (mit rechteckigem Querschnitt und Gutzuführung durch die Decke des Abscheiders) zeichnet sich der erfindungsgemässe Umlenkabscheider durch einen wesentlich verlängerten Kontakt zwischen Gut und Gas – somit durch eine bessere Wärmeübertragung – und durch eine ganz erheblich verbesserte Abscheidung des Feststoffes aus.

Zweckmässige Ausgestaltungen der Erfindung sind Gegenstand der Unteransprüche und werden im Zusammenhang mit der Beschreibung einiger Ausführungsbeispiele näher erläutert. In der Zeichnung zeigen

Fig. 1 eine schematische Seitenansicht eines mehrstufigen Wärmetauschers (mit nachgeschaltetem Drehrohrofen),

Fig. 2 und 3 Seitenansicht und Aufsicht eines ersten Ausführungsbeispieles eines Umlenkabscheiders;

Fig. 4 und 5 Seitenansicht und Aufsicht einer weiteren Ausführungsform des erfindungsgemässen Umlenkabscheiders.

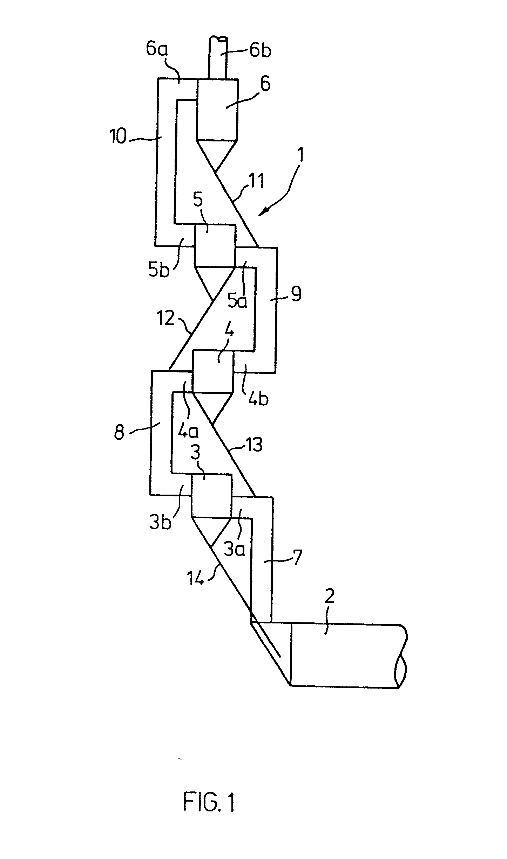

Der in Fig. 1 in ganz schematischer Form dargestellte mehrstufige Wärmetauscher 1 dient zur Vorwärmung von feinkörnigem Gut, das anschliessend in einem Drehrohrofen 2 gebrannt bzw. gesintert wird. Der Wärmetauscher 1 besteht aus vier übereinander angeordneten Wärmetauscherstufen, von denen die drei unteren Stufen Umlenkabscheider 3, 4 und 5 und die oberste Stufe einen Zyklon 6 enthalten. Eine Gasleitung 7 führt die heissen Abgase des Drehrohrofens 2 dem Umlenkabscheider 3 zu. Eine Gasleitung 8 verbindet die Umlenkabscheider 3 und 4, eine Gasleitung 9 die Umlenkabscheider 4 und 5 und eine Gasleitung 10 den Umlenkabscheider 5 mit dem Zyklon 6. Gutaustragsleitungen 11, 12, 13 und 14 führen das im Zyklon 6 bzw. in den Umlenkabscheidern 3, 4 und 5 abgeschiedene Gut jeweils in die Gasleitung der nächst tieferen Stufe (bzw. – Gutleitung 14 – in den Drehrohrofen 2).

Der in der obersten Stufe des Wärmetauschers 1 vorgesehene Zyklon 6 ist in bekannter Weise mit einem horizontalen Gaseintrittsstutzen 6a und einem vertikalen Tauchrohr und Gasaustrittsstutzen 6b versehen. Die Umlenkabscheider 3, 4 und 5 besitzen demgegenüber in horizontalen Ebenen unterschiedlicher Höhenlage angeordnete Gaseintrittsstutzen 3a bzw. 4a, 5a und Gasaustrittsstutzen 3b bzw. 4b, 5b.

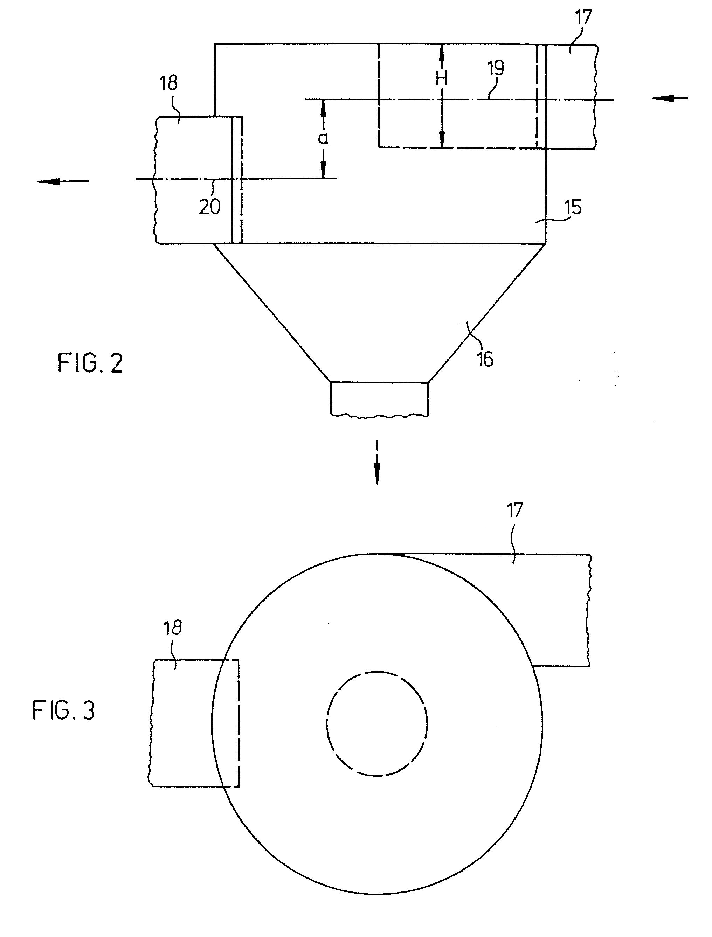

Die Fig. 2 bis 5 zeigen zwei Ausführungsbeispiele derartiger Umlenkabscheider.

Bei dem Ausführungsbeispiel gemäss Fig. 2 und 3 enthält der Umlenkabscheider einen oberen zylindrischen Teil 15 und einen unteren Abscheidetrichter 16. An den oberen zylindrischen Teil ist tangential ein Gaseintrittsstutzen 17 und radial ein Gasaustrittsstutzen 18 angeschlossen. Diese beiden Stutzen sind in horizontalen Ebenen unterschiedlicher Höhenlage angeordnet. Der Abstand a zwischen diesen horizontalen Ebenen 19, 20 beträgt das 0,5- bis 1,0fache, vorzugsweise das 0,6- bis 0,8fache der Höhe H des Gaseintrittsstutzens 17 höher als der Gasaustrittsstutzen 18 angeordnet.

Der Gaseintrittsstutzen 17 und der Gasaustrittsstutzen 18 sind am Umfang des Umlenkabscheiders gegeneinander versetzt. Beim dargestellten Ausführungsbeispiel beträgt die Versetzung annähernd 180°; es ist jedoch auch eine geringere Versetzung, beispielsweise um etwa 90°, möglich.

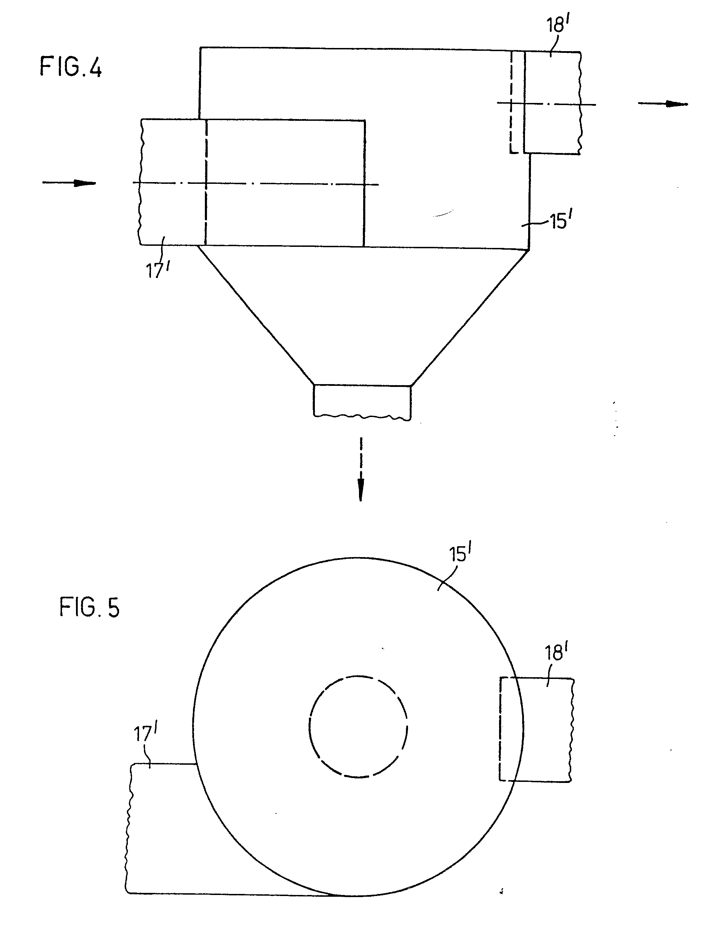

Bei dem Ausführungsbeispiel gemäss den Fig. 4 und 5 ist an den oberen zylindrischen Teil 15' des Umlenkabscheiders tangential ein Gaseintrittsstutzen 17' und radial ein Gasaustrittsstutzen 18' angeschlossen, wobei hier jedoch der Gaseintrittsstutzen 17' tiefer als der Gasaustrittsstutzen 18' vorgesehen ist.

Strömungstechnische Versuche ergaben für einen Umlenkabscheider gemäss den Fig. 2 und 3 folgende optimalen geometrischen Verhältnisse:

– Verhältnis von Höhe zu Breite des Gaseintrittsstutzens = 1,5
– Verhältnis von Eintritts- zu Austrittsquerschnitt = 0,85
– Verhältnis des Durchmessers des zylindrischen Oberteiles des Umlenkabscheiders zum Durchmesser des Gasaustrittsstutzens = 1,5
– Verhältnis von Höhe zu Druchmesser des zylindrischen Oberteiles = 1,0 bis 1,3
– Konuswinkel des Abscheidetrichters = 50°
– Verhältnis der Eintauchtiefe zum Durchmesser des Gasaustrittsstutzens = 0,6.

Zur Erläuterung des durch die Erfindung erzielten technischen Fortschrittes diene folgende Gegenüberstellung (Relativzahlen) zwischen den Daten eines üblichen Zyklons und eines erfindungsgemässen Umlenkabscheiders gemäss den Fig. 2 und 3:

| | Üblicher Zyklon | Erfindungsgemässer Umlenkabscheider |
|---|---|---|
| Bauvolumen | 100 | 65 |
| Bauhöhe | 100 | 75 |
| Abscheidegrad | 100 | 85 |
| Druckverlust elektr.Energie | 100 | 70 |
| bedarf | 100 | 70 |

Da der Abscheidegrad des erfindungsgemässen Umlenkscheiders je nach Auslegung zwischen 70 und 95% liegt, wird der thermische Wirkungsgrad des Wärmetauschers kaum beeinträchtigt. Durch die gegenüber einem Zyklon wesentlich einfachere Strömungsführung des erfindungsgemässen Umlenkabscheiders ergibt sich eine drastische Verringerung des Energiebedarfes und eine erhebliche Verkleinerung von Bauhöhe und Bauvolumen. Diese Vorteile machen sich besonders bei grossen Anlagen in einer erheblichen Verringerung der Anlage- und Betriebskosten bemerkbar.

Wie die Fig. 3 und 5 zeigen, kann der Gasaustrittsstutzen in Form eines Tauchrohres ein Stück in den Innenraum des zylindrischen Teiles des Umlenkabscheiders hineintragen. Der optimale Wert dieser Eindringtiefe wird zweckmässig durch Versuche festgelegt.

**Patentansprüche**

1. Mehrstufiger Wärmetauscher (1) zur Wärmebehandlung von feinkörnigem Gut mit einem heissen Gasstrom, der den mehrere übereinander angeordnete Wärmetauscherstufen enthaltenden Wärmetauscher von unten nach oben durchströmt, wobei das dem Wärmetauscher oben zugeführte Gut wiederholt aus dem Gasstrom abgeschieden und dann in der nächst tieferen Wärmetauscherstufe erneut in den Gasstrom eingeführt wird, wobei wenigstens eine der unteren Wärmetauscherstufen einen Umlenkabscheider (3, 4, 5) enthält, dessen Gaseintrittsstutzen (3a, 4a, 5a) und Gasaustrittsstutzen (36, 46, 56) am Umfang des Umlenkabscheiders gegeneinander versetzt und in unterschiedlicher Höhenlage oberhalb eines Abscheidetrichters (16) angeordnet sind und wenigstens die oberste Wärmetauscherstufe einen Zyklon (6) mit horizontalem Gaseintrittsstutzen (6a) und vertikalem Tauchrohr (6b) aufweist,
gekennzeichnet durch folgende Merkmale:

a) Die Umlenkabscheider (3, 4 bzw. 5) weisen über ihrem Abscheidetrichter einen Oberteil (15, 15') von zylindrischem Querschnitt auf;
b) der Gaseintrittsstutzen (17, 17') ist tangential an diesen zylindrischen Oberteil (15, 15') der Umlenkabscheider (3, 4 bzw. 5) angeschlossen;
c) die Gutaustragsleitungen (13, 12 bzw. 11) der einzelnen Wärmetauscherstufen münden jeweils in die zum Gaseintrittsstutzen des Umlenkabscheiders (3, 4 bzw. 5) der nächst tieferen Wärmetauscherstufe führende Gasleitung (7, 8 bzw. 9) ein.

2. Wärmetauscher nach Anspruch 1, dadurch gekennzeichent, dass der Gasaustrittsstutzen (18, 18') radial an den zylindrischen Oberteil (15, 15') des Umlenkabscheiders angeschlossen ist.
3. Wärmetauscher nach Anspruch 1, dadurch gekennzeichnet, dass der Abstand (a) zwischen den horizontalen Ebenen (19, 20), in denen die Achsen von Gaseintrittsstutzen (17) und Gasaustrittsstutzen (18) liegen, den 0,5- bis 1,0fachen, vorzugsweise den 0,6- bis 0,8fachen Wert der Höhe (H) des Gaseintrittsstutzens aufweist.
4. Wärmetauscher nach Anspruch 1, dadurch gekennzeichnet, dass der Gaseintrittsstutzen (17) höher als der Gasaustrittsstutzen (18) angeordnet ist.
5. Wärmetauscher nach Anspruch 1, dadurch gekennzeichnet, dass der Gaseintrittsstutzen (17') tiefer als der Gasaustrittsstutzen (18') angeordnet ist.

6. Wärmetauscher nach Anspruch 1, dadurch gekennzeichnet, dass der Gaseintrittsstutzen (17, 17') und der Gasaustrittsstutzen (18, 18') um bis zu 180° am Umfang des Umlenkabscheiders gegeneinander versetzt sind

**Revendications**

1. Echangeur de chaleur (1) à plusieurs étages, destiné au traitement thermique de matière à granulométrie fine par un courant gazeux chaud qui balaie de bas en haut les multiples étages superposés que comprend l'échangeur, la matière dirigée par le haut dans l'échangeur étant séparée plusieurs fois du courant gazeux et réintroduite ensuite dans ce dernier dans l'étage immédiatement inférieur de l'échangeur, au moins l'un des étages inférieurs de l'échangeur comprenant un séparateur à déviation (3, 4, 5) dont la tubulure d'entrée (3a, 4a, 5a) et la tubulure de sortie de gaz (3b, 4b, 5b) sont décalées l'une par rapport à l'autre sur sa circonférence et sont disposées à des niveaux différents au-dessus d'une trémie (16) et au moins l'étage supérieur de l'échangeur comprenant un cyclone (6) à tubulure horizontale d'entrée de gaz (6a) et à tube plongeur vertical (6b), échangeur caractérisé par les particularités suivantes:

a) les séparateurs à déviation (3, 4, 5) comprennent au-dessus de leur trémie de séparation une partie supérieure (15, 15') de section cylindrique;
b) la tubulure d'entrée de gaz (17, 17') est raccordée tangentiellement à cette partie cylindrique supérieure (15, 15') du séparateur à déviation (3, 4, 5);
c) chaque tubulure de décharge de la matière (13, 12, 11) des différents étages de l'échangeur débouche dans la canalisation (7, 8, 9) menant le gaz dans la tubulure d'entrée de ce dernier dans le séparateur à déviation (3, 4, 5) de l'étage immédiatement inférieur de l'échangeur.

2. Echangeur de chaleur selon la revendication 1, caractérisé en ce que la tubulure de sortie de gaz (18, 18') est raccordée radialement à la partie cylindrique supérieure (15, 15') du séparateur à déviation.
3. Echangeur de chaleur selon la revendication 1, caractérisé en ce que la distance (a) séparant les plans horizontaux (19, 20) dans lesquels passent les axes des tubulures d'entrée (17) et de sortie (18) des gaz correspond à 0,5 à 1,0 fois, de préférence à 0,6 à 0,8 fois la hauteur (H) de la tubulure d'entrée de gaz.
4. Echangeur de chaleur selon la revendication 1, caractérisé en ce que la tubulure d'entrée de gaz (17) est placée plus haut que la tubulure de sortie de gaz (18).
5. Echangeur de chaleur selon la revendication 1, caractérisé en ce que la tubulure d'entrée de gaz (17') est placée plus bas que la tubulure de sortie de gaz (18').
6. Echangeur de chaleur selon la revendication 1, caractérisé en ce que la tubulure d'entrée de gaz (17, 17') et la tubulure de sortie de gaz (18, 18') sont décalées l'une par rapport à l'autre d'un angle pouvant atteindre 180° à la circonférence du séparateur à déviation.

## Claims

1. Multiple-stage heat exchanger (1) for heat treatment of fine-grained material with a hot gas stream which flows upwards through the heat exchanger which contains several heat exchange stages arranged one above the other, and the material supplied to the heat exchanger from above is repeatedly separated from the gas stream and then reintroduced into the gas stream into the heat exchange stage immediately below, and at least one of the lower heat exchange stages contains a deflector-separator (3; 4; 5) the gas inlet pipes (3a, 4a, 5a) and the gas outlet pipes (3b, 4b, 5b) of which are offset relative to each other on the periphery of the deflector-separator and arranged at a different height above a hopper (16), and at least the uppermost heat exchange stage has a cyclone (6) with a horizontal gas inlet pipe (6a) and a vertical dip pipe (6b), characterised by the following features:

a) the deflector-separators (3, 4, 5) have an upper portion (15, 15') of cylindrical cross-section above their hoppers;

b) the gas inlet pipe (17, 17') is connected tangentially onto this cylindrical upper portion (15, 15') of the deflector-separator (3, 4, 5);
c) the material delivery lines (13, 12, 11) of the individual heat exchange stages open onto the gas line (7, 8, 9) leading to the respective gas inlet pipe of the deflector-separator (3, 4, 5) of the heat exchange stage immediately below.

2. Heat exchanger according to claim 1, characterised in that the gas outlet pipe (18, 18') is connected radially onto the cylindrical upper portion (15, 15') of the deflector-separator.

3. Heat exchanger according to claim 1, characterised in that the distance (a) between the horizontal planes (19, 20) in which the axes of gas inlet pipes (17) and outlet pipes (18) lie amounts to 0.5 to 1.0 times, preferably 0.6 to 0.8 times the height (H) of the gas inlet pipe.

4. Heat exchanger according to claim 1, characterised in that the gas inlet pipe (17) is arranged higher than the gas outlet pipe (18).

5. Heat exchanger according to claim 1, characterised in that the gas inlet pipe (17') is arranged lower than the gas outlet pipe (18').

6. Heat exchanger according to claim 1, characterised in that the gas inlet pipe (17, 17') and the gas outlet pipe (18, 18') are offset relative to each other on the periphery of the deflector-separator by up to 180°.

FIG. 1

FIG. 2

FIG. 3

FIG.4

18′

17′

15′

FIG. 5

15′

18′

17′